# FASCICULE DE BREVET EUROPEEN

(11) **EP 1 858 631 B1**
(45) Date de publication et mention de la délivrance du brevet: **21.05.2014**
(21) Numéro de dépôt: 06726057.0
(22) Date de dépôt: 09.03.2006
(51) Int. Cl.: B01D 67/00, B01D 71/68, B01D 71/52, B01D 71/82, C08J 5/22, H01M 8/10, C08L 71/00

(54) **EXTRUSION D'UN POLYMERE THERMOPLASTIQUE PORTANT DES GROUPEMENTS IONIQUES ACIDES**
EXTRUSION EINES THERMOPLASTISCHEN POLYMERS MIT SAUREN IONISCHEN GRUPPEN
EXTRUSION OF A THERMOPLASTIC POLYMER BEARING ACID IONIC GROUPINGS

(30) Priorité: 16.03.2005 FR 0502602
(43) Date de publication de la demande: 28.11.2007
(73) Titulaire: Institut Polytechnique de Grenoble, 38000 Grenoble (FR); Eras-Labo, 38330 Saint Nazaire les Eymes (FR); COMMISSARIAT A L'ENERGIE ATOMIQUE ET AUX ENERGIES ALTERNATIVES, 75015 Paris (FR); Centre National de la Recherche Scientifique, 75016 Paris (FR); SOLVAY SA, 1120 Bruxelles (BE)
(72) Inventeur: SANCHEZ, Jean-Yves, F-38330 Saint Ismier (FR); IOJOIU, Cristina, F-38000 Grenoble (FR); PIFFARD, Yves, F-44240 La Chapelle sur Erdre (FR); EL KISSI, Nadia, F-38000 Grenoble (FR); CHABERT, France, F-38550 Auberives sur Vareze (FR)
(74) Mandataire: Goulard, Sophie
(86) Numéro de dépôt international: PCT/FR2006/000526
(87) Numéro de publication internationale: WO 2006/097603

(56) Documents cités:
- EP-A- 1 380 619
- WO-A-02/092673
- FR-A- 2 841 255
- US-A- 3 341 366
- US-A- 4 711 907
- US-A1- 2003 187 081

## Description

La présente invention concerne un procédé de préparation de membranes constituées par un polymère thermoplastique portant des groupements ioniques acides.

Il est connu que les polymères portant des groupements ioniques peuvent être utilisés pour l'élaboration de membranes pour des piles à combustible. Les groupements ioniques peuvent être des groupements acides ou des groupements alcalins.

Il est également connu de préparer des films de polymère soit par coulage à partir d'une solution du polymère dans un solvant volatil, soit par extrusion. L'extrusion est avantageuse, car elle permet d'éviter l'utilisation de solvants volatils, qui peuvent être inflammables.

L'extrusion d'un polymère peut être effectuée à condition qu'il présente une stabilité thermique telle que le polymère ne soit pas dégradé à la température requise pour l'extrusion, qui dépend de la température de transition vitreuse.

La comparaison de la stabilité thermique d'un polymère ayant un squelette donné ne portant pas de groupements ioniques avec la stabilité thermique d'un polymère qui a le même squelette mais qui porte des groupements ioniques montre que le polymère avec groupements ioniques a une stabilité thermique moindre. La température de dégradation est donc plus faible et elle est généralement incompatible avec la température requise pour l'extrusion, qui dépend de la température de transition vitreuse.

Il est connu d'abaisser la température de transition vitreuse d'un polymère en le mélangeant avec un plastifiant, pour permettre une extrusion sans dégradation thermique, le plastifiant étant ensuite éliminé après extrusion. Les polymères qui ont été extrudés par ce procédé sont des polymères qui ne portent pas de groupements ioniques. Comme plastifiants utilisés pour l'extrusion de polymères thermoplastiques, on peut citer les paraffines chlorées ou non chlorées, les esters carboxyliques (tels que les adipates, les benzoates, les citrates et les phtalates), les esters phosphoriques, les toluènes disulfonamides. Par exemple H.H.Kausch, et al., (Traité des Matériaux, tome 14, Presses Polytechniques et Universitaires Romandes, Lausanne, 2001) décrivent l'extrusion de polystyrène après incorporation d'agents organiques à titre de plastifiant.

Les inventeurs ont alors envisagé de préparer des films de polymères portant des groupements ioniques acides en soumettant à l'extrusion un mélange de polymère et de plastifiant, puis en éliminant le plastifiant du film obtenu par extrusion. Cependant, il est apparu que, parmi les nombreux composés connus comme plastifiants pour l'extrusion de polymères sans groupements ioniques, tous n'étaient pas utilisables avec un polymère à groupements acides. Par exemple, les paraffines ont peu d'affinité pour les groupements ioniques. En outre, en présence de faibles traces d'humidité, les esters carboxyliques et les esters phosphoriques sont dégradés par les groupements ioniques acides du polymère à extruder.

Les travaux des inventeurs leur ont alors permis de définir une famille de composés utilisables comme plastifiants pour des polymères portant des groupements ioniques acides, lesdits plastifiants abaissant la température de transition vitreuse et permettant une température d'extrusion qui reste inférieure à la température de dégradation du polymère.

La présente invention a par conséquent pour objet un procédé de préparation d'une membrane par extrusion d'un polymère thermoplastique portant des groupements ioniques acides selon la revendication 1.

Le procédé selon l'invention consiste à préparer un mélange constitué par au moins un plastifiant et par un polymère à groupements ioniques acides -A^{p-}(H⁺)ₚ dans lesquels A représente la partie anionique du groupement ionique, et p est la valence du groupement anionique, à extruder le mélange obtenu pour former un film, puis à laver en milieu aqueux le film obtenu pour éliminer ledit (lesdits) plastifiant(s). Il est caractérisé en ce que le(s) plastifiant(s) est (sont) choisi(s) parmi les composés non volatils qui sont stables vis-à-vis des groupements ioniques du polymère, qui sont solubles dans l'eau ou dans les solvants miscibles à l'eau, lesdits plastifiants étant choisis parmi :
- les composés agissant avec le groupe ionique du polymère par formation d'une liaison faible de type liaison hydrogène, choisi dans le groupe constitué par le sulfamide H₂N-SO₂-NH₂, les tétraalkylsulfamides, les alkylsulfonamides, et les arylsulfonamides R³-SO₂NH₂ dans lesquels R³ est un groupe phényle, un groupe tolyle ou un groupe naphtyle ;
- les composés agissant avec le groupe ionique du polymère par formation d'une liaison forte, de type liaison ionique choisis parmi ceux définis dans la revendication 1.

Le milieu aqueux utilisé pour le lavage du film obtenu après extrusion est constitué par de l'eau, par un solvant miscible à l'eau dans lequel le plastifiant est soluble, ou par un mélange d'un tel solvant avec de l'eau.

Par composé non volatil, on entend un composé dont la température d'ébullition est supérieure à la température maximale d'extrusion du polymère auquel il est associé. Cette température est généralement supérieure à 200°C.

L'affinité pour le cation H⁺ et l'affinité pour la partie anionique des groupements ioniques peuvent être évaluées respectivement par le caractère donneur ou le caractère accepteur définis sur les échelles "Donor Number" et "Acceptor Number" définies par Gutman, et publiées dans C. Reichardt, Solvents and solvent effects in organic chemistry. 2^{nd} Edition, VCH, 1990.

Le procédé proposé peut être mis en oeuvre pour l'élaboration de membranes à partir d'un polymère thermoplastique dont la chaîne est constituée par des unités récurrentes identiques ou différentes, chaque unité récurrente comprenant au moins un groupe fonctionnel et au moins un groupe aromatique mono- ou polynucléaire, le groupe fonctionnel étant choisi parmi les groupes ester, cétone, éther, sulfure, sulfone, benzoxazole, amide et imide, au moins une partie des groupes aromatiques portant un groupe ionique acide. Le groupe fonctionnel peut faire partie de la chaîne principale du polymère, et se trouver par conséquent entre deux groupes aromatiques. Le groupe fonctionnel peut aussi faire partie d'un substituant latéral d'un groupe aromatique, ledit groupe aromatique faisant partie de la chaîne principale du polymère.

Le groupement ionique -A^{p-}(H⁺)ₚ peut être choisi parmi tous les groupements ioniques suffisamment dissociés dans le milieu réactionnel. A titre d'exemple, on peut citer le groupement -O⁻H⁺, le groupement sulfonate -SO₃⁻H⁺, le groupement sulfate -OSO₃⁻H⁺, le groupement carboxylate -CO₂H⁺, le groupement thiocarboxylate -C(=S)O⁻H⁺, le groupement dithiocarboxylate -CS₂⁻H⁺, le groupement phosphonate -PO₃²⁻(H⁺)₂, le groupement sulfonylamidure -SO₂NH⁻H⁺, et les groupements sulfonylimidure (X-SO₂NSO₂-)⁻H⁺ dans lesquels dans lesquels X est un groupe alkyle ayant de préférence de 1 à 5 atomes de carbone, un groupe alkyle perfluoré ou partiellement fluoré ayant de préférence de 1 à 5 atomes de carbone, un groupe alkényle ayant de préférence de 1 à 5 atomes de carbone, un groupe alkényle perfluoré ou partiellement fluoré ayant de préférence de 1 à 5 atomes de carbone, un groupe oxyalkylène CH₃-(O-(CH₂)ₘ)ₙ dans lequel de préférence 2 ≤ m < 5 et 1 ≤ n ≤ 10, ou un groupe aryle comprenant un ou plusieurs noyaux aromatiques condensés ou non et portant éventuellement un substituant. Le procédé est particulièrement intéressant pour les polymères dans lesquels la teneur en groupements ioniques est supérieure ou égale à 1 mole par kg de polymère.

Comme exemples de polymères thermoplastiques, on peut citer les polymères qui comprennent des segments choisis parmi les segments suivants dans lesquels le groupe fonctionnel -A^{p-}(H⁺)ₚ représente n'importe lequel des groupes ioniques ci-dessus, et les indices n, m, x et y représentent chacun un nombre d'unités récurrentes :
- un polyéther dont certaines unités récurrentes portent un groupement ionique acide, par exemple un polyphénylène oxyde répondant à la formule I, dans laquelle R et R₁ représentent indépendamment l'un de l'autre H, un groupe alkyle ayant de préférence de 1 à 5 atomes de carbone, un groupe alkényle ayant de préférence de 2 à atomes de carbone, ou un groupe aryle 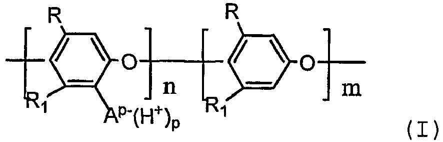
- une polyéther-éther-cétone qui est constituée par des unités comprenant dans la chaîne des fonctions éther et des fonctions cétone, et dont certaines unités portent un groupement ionique acide, par exemple un polyéther répondant à la formule II ci-après 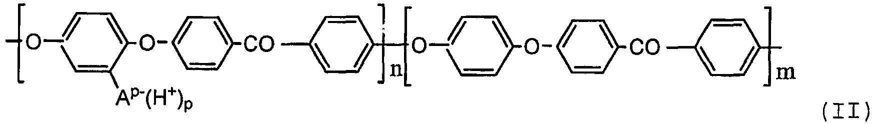
- une polyéther-cétone qui est constituée par des unités comprenant dans la chaîne des fonctions éther et des fonctions cétone, et dont certaines unités portent un groupement ionique acide, par exemple un polyéther répondant à la formule III ci-après 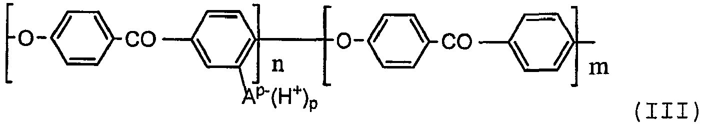
- un polybenzoxazole dont certaines unités portent un groupement ionique acide, par exemple un polymère dont l'unité récurrente répond à la formule IV suivante : 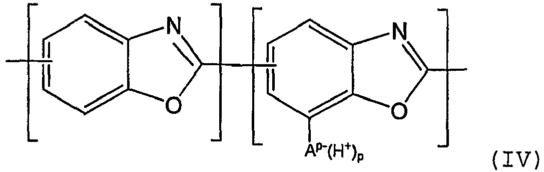
- un acide polyamique dont certaines unités portent un groupement ionique acide, et qui se transforme en polyimide par la chaleur de l'extrusion, par exemple le polyimide suivant : 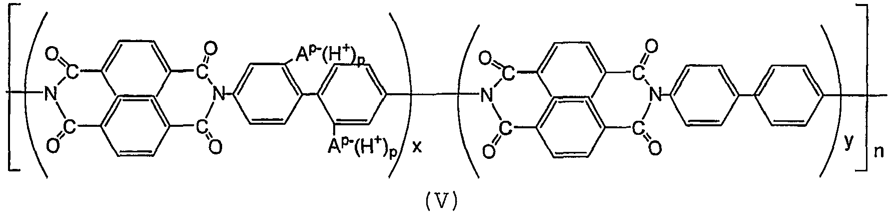
- un polyimide répondant à la formule V ;
- un polyparaphénylène, comprenant par exemple des unités répondant à la formule VI 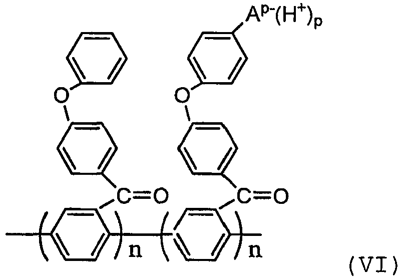 tel que le poly(4-phénoxybenzoyl-1,4-phénylène) commercialisé par la société Maxdem, Inc sous la dénomination "poly-X200" ;
- un polyphénylène sulfure, par exemple un polymère dont l'unité récurrente répond à la formule VII suivante : 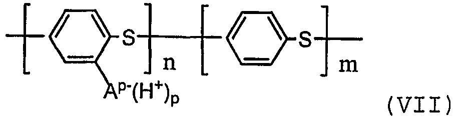
- une polyéther sulfone, par exemple un polymère répondant à la formule VIII ci-dessous dans laquelle R₂ représente un simple liaison ou un groupe -C(CH₃)- :

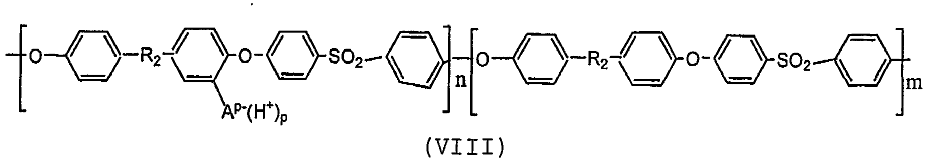

Une famille particulière de polymères est constituée par les polymères comprenant des segments choisis parmi les segments ci-dessus, dans lesquelles le groupe ionique est -SO₃H. Ils sont représentées par les formules suivantes :

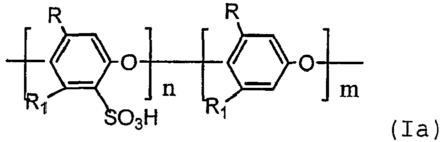

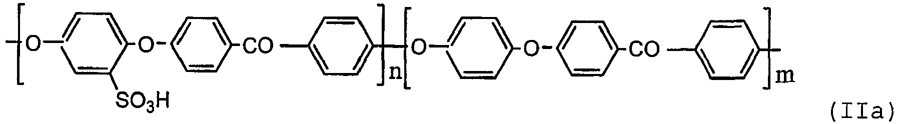

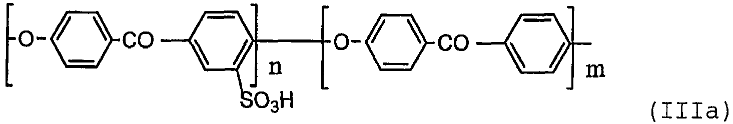

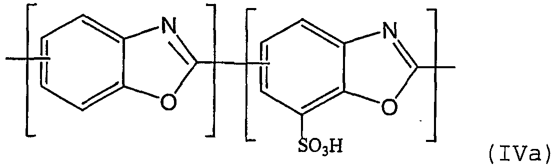

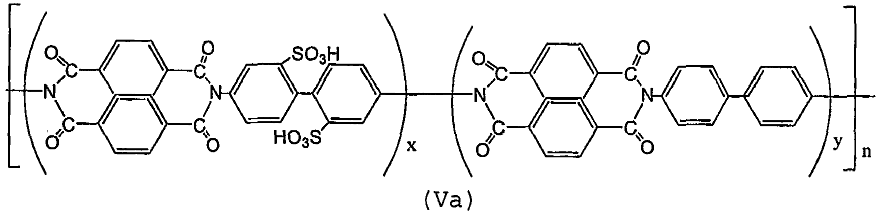

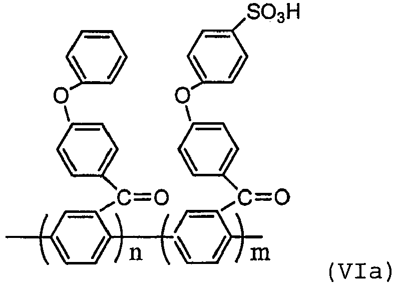

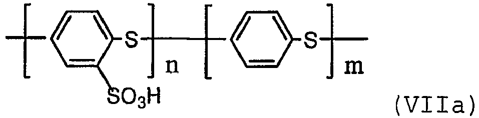

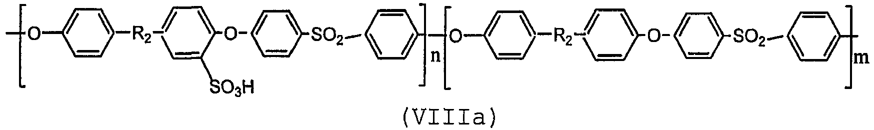

Dans les formules ci-dessus, les indices n, m, x et y, représentent chacun un nombre d'unités récurrentes, et ils sont choisis de sorte que la masse moléculaire du polymère soit comprise de préférence entre 20 000 g/mole et 500 000 g/mole, et une capacité d'échange d'ions CEI supérieure à 0,8 H⁺/g.

Parmi les composés utilisables comme plastifiant et agissant avec le groupe ionique du polymère par formation d'une liaison faible du type liaison hydrogène, on peut citer le sulfamide H₂N-SO₂-NH₂, les tétraalkylsulfamides dans lesquels les groupes alkyle possèdent de préférence de 1 à 5 atomes de carbone (par exemple le tétraéthylsulfamide), les alkylsulfonamides dans lesquels le groupe alkyle possède de préférence de 1 à 5 atomes de carbone, et les arylsulfonamides R³-SO₂NH₂ dans lesquels R³ est par exemple un groupe phényle, un groupe tolyle ou un groupe naphtyle.

Les composés utilisables comme plastifiant et agissant avec le groupe ionique du polymère par formation d'une liaison forte, du type liaison ionique, sont :
- l'imidazole, les N-alkylimidazole, le N-vinyl-imidazole ;
- les oligomères d'oxyde d'éthylène portant un groupe terminal amine primaire ou amine secondaire. Des oligomères portant un groupe terminal amine primaire sont commercialisées sous la dénomination Jeffamine®. Les oligomères qui portent un groupe terminal amine secondaire peuvent être préparés par un procédé consistant à faire réagir un oligoéther terminé par une ou deux fonctions alcool avec le chlorure de thionyle la (les) fonction(s) alcool par des chlores, à traiter le produit obtenu par un excès de pipérazine et puis à purifier le produit final [Cf. X.Ollivrin, F.Alloin, J-F. Le Nest, D.Benrabah, J-Y.Sanchez, Electrochimica Acta, 48, 14-16, 1961-69 (2003)] ;
- les amines secondaires, telles que par exemple la diéthanolamine commercialisé par la société Aldrich sous la référence D8,330-3) et la bis (2-méthoxyéthyl)amine commercialisée par la société Aldrich sous la référence B4,820-7 ;
- les amines tertiaires portant trois substituants oligo(oxyéthylène).

Un plastifiant de cette nature, qui forme une liaison ionique avec les groupements ioniques du polymère, fixe le proton du groupe acide porté par le polymère en donnant un acide conjugué, de type ammonium ou imidazolium. Un tel acide conjugué est un acide très faible qui ne dégrade ni le plastifiant ni le polymère ionique acide et qui permet d'effectuer l'extrusion à des températures plus élevées.

Les composés précités peuvent être utilisés comme plastifiants seuls, ou avec un composé agissant comme plastifiant du squelette, les divers composés devant être miscibles.

Le mélange de polymère ionique thermoplastique et de plastifiant soumis à l'extrusion peut contenir en outre une charge qui peut être choisie parmi les charges destinées à améliorer la tenue mécanique du film de polymère obtenu après extrusion, et les charges destinées à améliorer d'autres propriétés du matériau final. La charge destinée à améliorer la tenue mécanique peut être choisie parmi les fibres de verre, les fibres de carbone, les nanotubes de carbone et les microfibrilles de cellulose, les fibres d'alumine, des fibres de polyaramide, commercialisées sous la dénomination Kevlar®. Comme charge destinée à améliorer l'hydrophilie d'un film de polymère obtenu après extrusion, et par conséquent sa conductivité, on peut citer l'acide phosphatoantimonique (H3).

Un polymère du type polysulfone sulfonée répondant à la formule (VIIIa) 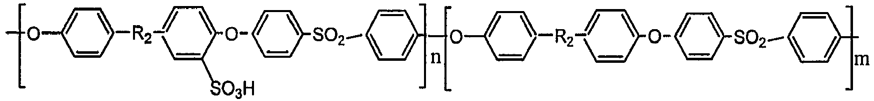 peut être obtenu à partir des polymères commercialisés par la société Solvay, respectivement sous les dénominations UDEL® lorsque R₂ représente un groupe -C(CH₃)₂- et RADEl® lorsque R₂ représente une simple liaison. Ces polymères UDEL® et RADEL® ont une structure analogue à celle des polymères (VIII) ci-dessus, mais ils ne portent pas de groupements ioniques. Le procédé de préparation du polymère (VIII) à partir du polymère précurseur UDEL ou RADEL (VIIIp) comprend les étapes suivantes :
1. Préparation d'une solution anhydre du polymère (VIIIp) dans un solvant choisi parmi les solvants organiques chlorés (par exemple le dichloroéthane DCE, le tétrachloroéthane TCE ou le dichlorométhane DCM) ou le chloroforme ;
2. préparation d'une solution anhydre de chlorosulfonate de triméthylsilyle, qui est le réactif de sulfonation ;
3. mise en contact des deux solutions anhydres, sous agitation énergique, pendant une durée de quelques heures à une température entre 30°C et 65°C, sous argon ;
4. extraction du polymère sulfoné soit directement par filtration, soit par une précipitation suivie d'une filtration ;
5. évaporation à température ambiante du solvant de précipitation ;
6. lavage à l'eau du polymère sulfoné ;
7. séchage du polymère sulfoné sous vide dynamique, à une température entre 40°C et 80°C, par exemple à 50°C.

La présente invention est illustrée par les exemples suivants.

### Exemples 1 et 2

Les exemples 1 et 2 concernent la préparation de polysulfones sulfonées portant des groupes acides.

### Exemple 1

### Préparation d'un polysulfone sulfoné

Au cours d'une première étape, on a préparé une solution anhydre de polymère UDEL® en dissolvant 1600 g (3,62 moles) de polymère UDEL® dans 16 1 de DCE à 50°C, puis en séchant la solution par une distillation azéotropique jusqu'à élimination de 1 1 de DCE.

Parallèlement, on a préparé une solution anhydre de chlorosulfonate de triméthylsilyle en dissolvant dans 500 ml de DCE sec sous agitation magnétique et sous argon, 472 g (4,34 moles) de chlorure de triméthylsilane et 422 g (3,6 moles) de ClSO₃H, tous les constituants étant anhydres, pendant une durée de 2 h, HCl formé étant piégé.

Au cours d'une deuxième étape, on a mélangé les deux solutions anhydres sous balayage d'argon et on a maintenu le mélange pendant 17 h à 35°C sous agitation énergique.

Au cours d'une troisième étape, on a précité la solution dans l'éther de pétrole, on a séparé par filtration le précipité formé, et on l'a lavé trois fois à l'éther de pétrole, puis on a évaporé le résidu d'éther de pétrole sous air à température ambiante.

Enfin, on a lavé le précipité à l'eau distillée à pH neutre, on l'a séché à l'air à 20°C pendant une durée de 24 h, puis sous une pression de 20 mbar à 55°C pendant une durée de 72 h.

Le polymère obtenu a été soumis à une analyse par RMN ¹H, une analyse par spectroscopie infra-rouge et à un dosage acide-base.

Le degré de sulfonation, c'est-à-dire la capacité d'échange ionique CEI, déterminé par ces méthodes, est de 0,56 H⁺/mol d'unités de répétition, ce qui correspond à une capacité d'échange ionique de 1,14 meq/g.

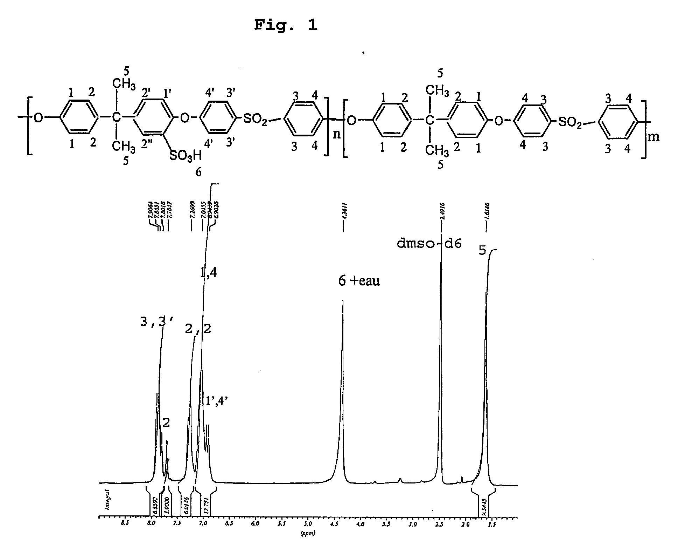

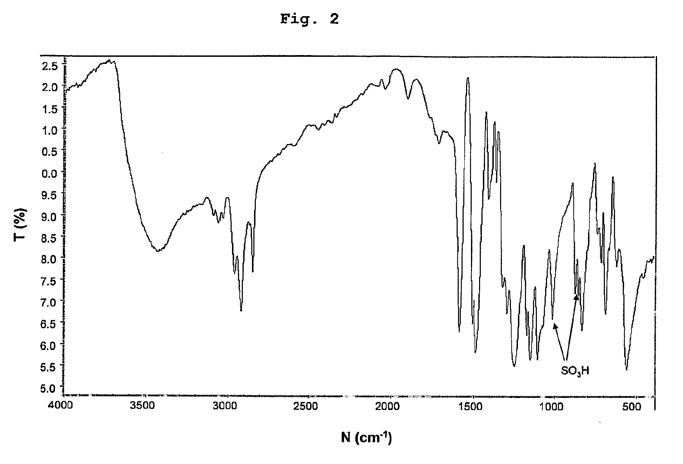

La figure 1 représente de spectre RMN-H¹ et la figure 2 représente le spectre IR. Sur la figure 2, T représente la transmission et N le nombre d'ondes.

### Exemple 2

### Préparation d'un polysulfone sulfoné

On a préparé une solution anhydre de polymère UDEL® en dissolvant 1800 g (4,07 moles) de polymère UDEL® dans 18 l de DCE à 50°C, puis en séchant la solution par une distillation azéotropique jusqu'à élimination de 1 l de DCE.

Parallèlement, on a préparé une solution anhydre de chlorosulfonate de triméthylsilyle en dissolvant dans 700 ml de DCE sec sous agitation magnétique et sous argon, 743 g (6,84 moles) de chlorure de triméthylsilane et 664 g (5,7 moles) de ClSO₃H, tous les constituants étant anhydres, pendant une durée de 2 h, HCl formé étant piégé.

Au cours d'une deuxième étape, on a mélangé les deux solutions anhydres sous balayage d'argon et on a maintenu le mélange pendant 17 h à 35°C sous agitation énergique.

Au cours d'une troisième étape, on a précipité la solution dans l'éther de pétrole, on a séparé par filtration le précipité formé, et on l'a lavé trois fois à l'éther de pétrole, puis on a évaporé l'éther de pétrole résiduel sous air, à température ambiante.

Finalement, on a lavé le précipité à l'eau distillée jusqu'à pH neutre, on l'a séché à l'air à 20°C pendant une durée de 24 h, puis sous une pression de 20 mbar à 55°C pendant une durée de 72 h.

Le polymère obtenu a été soumis à une analyse par RMN ¹H, une analyse par spectroscopie infra-rouge et à un dosage acide-base.

Le degré de sulfonation, c'est-à-dire la capacité d'échange ionique CEI, déterminé par ces méthodes, est de 0,7 H⁺/mol d'unités de répétition, ce qui correspond à une capacité d'échange ionique de 1,4 meq/g.

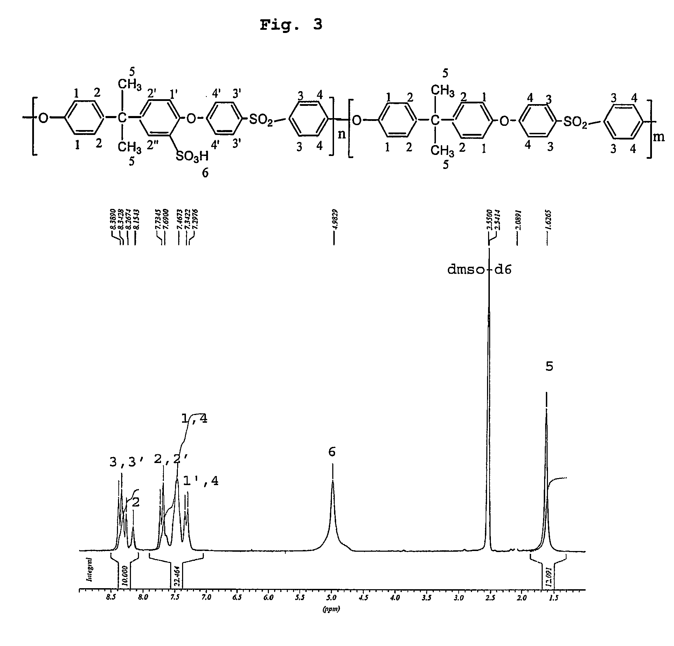

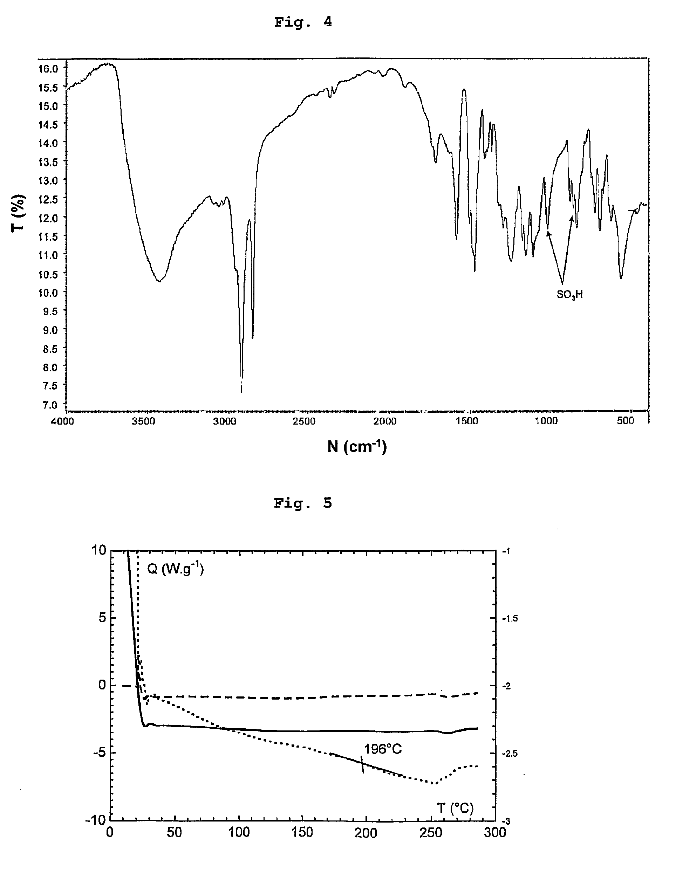

La figure 3 représente de spectre RMN-H¹ et la figure 4 représente le spectre IR. Sur la figure 4, T représente la transmission et N le nombre d'ondes.

La température de transition vitreuse du polysulfone sulfoné a été déterminée par calorimétrie différentielle à balayage, à l'aide d'un appareil commercialisé par la société TA Instruments sous la dénomination Modulated DSC 2920. Le mode de chauffage de l'échantillon sépare les composantes du flux de chaleur total en un signal appelé réversible et un autre signal appelé irréversible. Sur la courbe représentant le signal réversible, les transitions thermiques réversibles comme la transition vitreuse sont observées. Sur la courbe représentant le signal irréversible, les transitions thermiques irréversibles comme la fusion ou la cristallisation sont observées. Le thermogramme obtenu est représenté sur la figure 5, sur laquelle la courbe en trait plein représente le flux de chaleur total, la courbe en pointillés courts représente le signal réversible et la courbe en pointillés longs représente le signal irréversible. L'énergie Q (en W/g de polysulfone) est représentée en ordonnée, et la température T en abscisse. La figure 5 montre que la température de transition vitreuse est de 196°C (point d'inflexion sur la courbe du signal réversible).

### Exemples 3 à 7

Les exemples 3 à 7 démontrent l'aptitude à l'extrusion de différentes compositions contenant un polysulfone sulfoné et un plastifiant, et décrivent l'élaboration de membranes. Ils décrivent des essais de rhéométrie dynamique et des extrusions réalisées avec un Rhéomètre capillaire Gottfert 1500. La rhéométrie dynamique, avec l'utilisation de l'équivalence temps-température, permet de caractériser les mélanges dans les conditions de gradient de cisaillement qu'ils subissent dans une extrudeuse. La rhéométrie capillaire, en raison de sa maniabilité et des quantités modérées de polymère consommé, est bien adaptée à une étude d'extrudabilité. Les données obtenues par les deux types d'essais de rhéométrie sont représentatives d'une extrusion en extrudeuse mono ou bi-vis.

### Exemple 3

### Polysulfone sulfoné / imidazole

Cet exemple a été réalisé en utilisant une fraction, dite PSUSH, d'un polysulfone obtenu selon le mode opératoire de l'exemple 2, et de l'imidazole comme plastifiant. PSUSH désigne le produit constitué de particules ayant une dimension inférieure à 300 µm, obtenu par broyage du polysulfone obtenu selon l'exemple 2, puis tamisage à une dimension inférieure à 300 µ. Le mélange contenait 27% en masse, soit 31% en volume, de plastifiant.

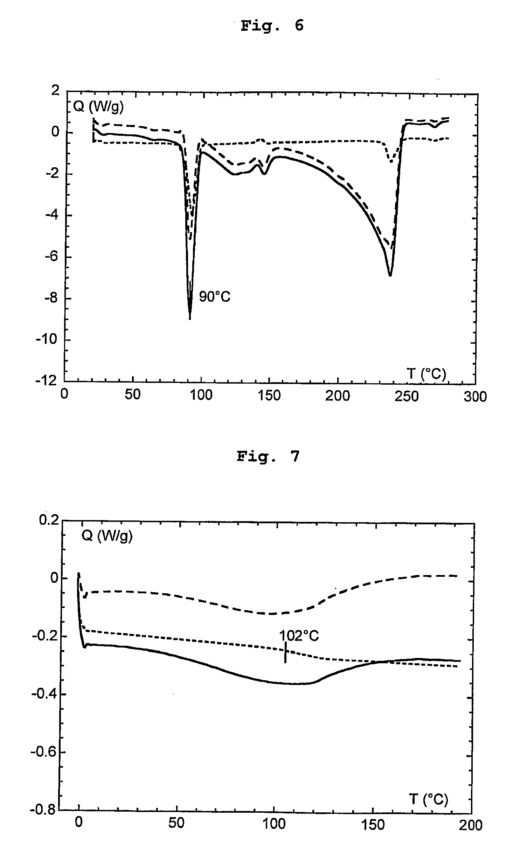

La température de fusion de l'imidazole, déterminée par DSC, est de 90°C, tel que montré sur la figure 6, qui représente le thermogramme DSC de l'imidazole. Sur la figure 6, la courbe en trait plein représente le flux de chaleur total, la courbe en pointillés courts représente le signal réversible et la courbe en pointillés longs représente le signal irréversible.

Le mélange PSUSH / imidazole été réalisé dans un mélangeur Rhéomix de Haake comprenant une chambre de 70 cm³ et des rotors contrarotatifs de 25 mm de diamètre. La chambre est surmontée d'une trémie par laquelle on effectue le remplissage. La température du mélangeur était régulée à 140°C. La vitesse de rotation des rotors était fixée à 80 tr/min, ce qui correspond à un cisaillement moyen de 80 s⁻¹.

PSUSH et l'imidazole ont été pesés séparément à 1 mg près, puis ils ont été préalablement mélangés par agitation mécanique avant d'être versés dans la trémie du mélangeur. Les rotors ont été actionnés pendant 20 minutes. Le produit obtenu est un liquide transparent, de couleur marron clair, peu visqueux à la température de réalisation du mélange, soit 140°C. A température ambiante, le produit devient un solide, il est homogène à l'oeil nu.

La transition vitreuse du mélange a été déterminée par DSC. La figure 7 représente le thermogramme DSC du mélange, et elle montre que la température de transition vitreuse est de 102°C. La courbe en trait plein représente le flux de chaleur total, la courbe en pointillés courts représente le signal réversible et la courbe en pointillés longs représente le signal irréversible.

Le mélange PSUSH / imidazole a été broyé dans un broyeur mécanique à lames (commercialisé sous la marque IKA) équipé d'une grille de 2 mm. Les grains récupérés après broyage ont été placés dans une étuve ventilée à 60°C pendant 4 heures pour éliminer l'eau qui gênerait l'extrusion.

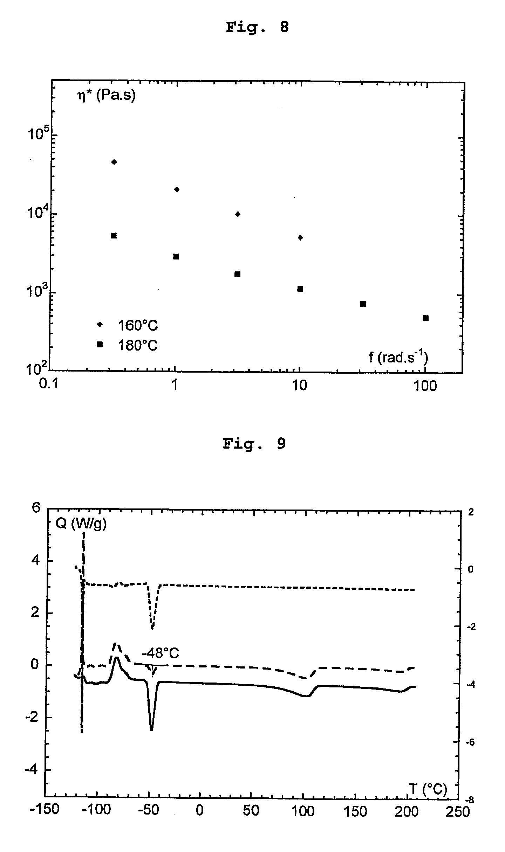

La viscosité du mélange PSUSH/imidazole a été caractérisée en rhéométrie dynamique avec un rhéomètre ARES de la société Rheometrics, à 160°C et 180°C et pour des gradients de cisaillements entre 10⁻¹ et 10² s⁻¹. La figure 8 montre le comportement du mélange à 160°C (carrés) et à 180°C (losanges). En ordonnée, η* représente la viscosité, et en abscisse, f représente la fréquence de sollicitation de l'échantillon.

La figure 8 montre que la viscosité est de 500 Pa.s à 100 s⁻¹ et à 180°C et que le mélange peut donc être extrudé.

On a préparé un film par extrusion d'un mélange PSUSH/imidazole à l'aide du rhéomètre capillaire Gottfert 1500. Ce rhéomètre comprend un réservoir chauffant dans lequel le mélange est introduit. Un piston pousse le mélange fondu à travers une filière plate d'épaisseur 0,8 mm. La température d'extrusion, qui doit être supérieure à la température de transition vitreuse du mélange pour que le polymère coule, mais inférieure à la température d'évaporation du plastifiant. La température d'extrusion choisie dans le cas présent est de 120°C. L'épaisseur du film en sortie de filière est de 0,8 mm, et l'étirage du film permet de diminuer son épaisseur jusqu'à 0,1 mm.

Le film est ensuite refroidi à température ambiante. Il est transparent et sa surface ne présente pas de défauts.

Le film est ensuite immergé dans l'eau pendant 24 heures à température ambiante pour éliminer le plastifiant qui se solubilise dans l'eau. Une analyse RMN du matériau après séchage permet de vérifier que le plastifiant est totalement éliminé. La membrane est ensuite conservée, dans l'eau ou en atmosphère saturée en humidité.

Les résultats électrochimiques sont obtenus par des mesures d'impédance en appliquant une tension sinusoïdale de faible amplitude à une cellule électrochimique, autour de sa tension d'équilibre. La conductivité protonique du film de polysulfone sulfoné acide, mesurée à 20°C et 90% d'humidité, de la même manière que dans l'exemple 3, est égale à 0,7 mS.cm⁻¹.

### Exemple 4

### Polysulfone sulfoné acide - tétraéthylsulfamide

Cet exemple a été réalisé en utilisant le polymère PSUSH utilisé dans l'exemple 3, et du tétraéthylsulfamide comme plastifiant. Le mélange contenait 26% en masse, soit 30% en volume, de plastifiant.

La température de fusion du tétraéthylsulfamide, déterminée par DSC, est de -48°C, tel que montré sur la figure 9, qui représente le thermogramme DSC du tétraéthylsulfamide. Sur la figure 9, la courbe en trait plein représente le flux de chaleur total, la courbe en pointillés courts représente le signal réversible et la courbe en pointillés longs représente le signal irréversible.

Le mélange PSUSH / tétraéthylsulfamide été réalisé dans un mélangeur Rhéomix analogue à celui utilisé dans l'exemple 3. La température du mélangeur était régulée à 100°C. La vitesse de rotation des rotors était fixée à 80 tr/min, ce qui correspond à un cisaillement moyen de 80 s⁻¹.

PSUSH et le tétraéthylsulfamide ont été pesés séparément à 1 mg près, puis ils ont été préalablement mélangés par agitation mécanique avant d'être versés dans la trémie du mélangeur. Les rotors ont été actionnés pendant 20 minutes. Le produit obtenu est un liquide transparent, de couleur marron clair, peu visqueux à la température de réalisation du mélange, soit 100°C. A température ambiante, le produit devient un solide, il est homogène à l'oeil nu.

La transition vitreuse du mélange est de 100°C, cette estimation étant faite l'estimer en chauffant lentement le mélange qui devient liquide vers 100°C.

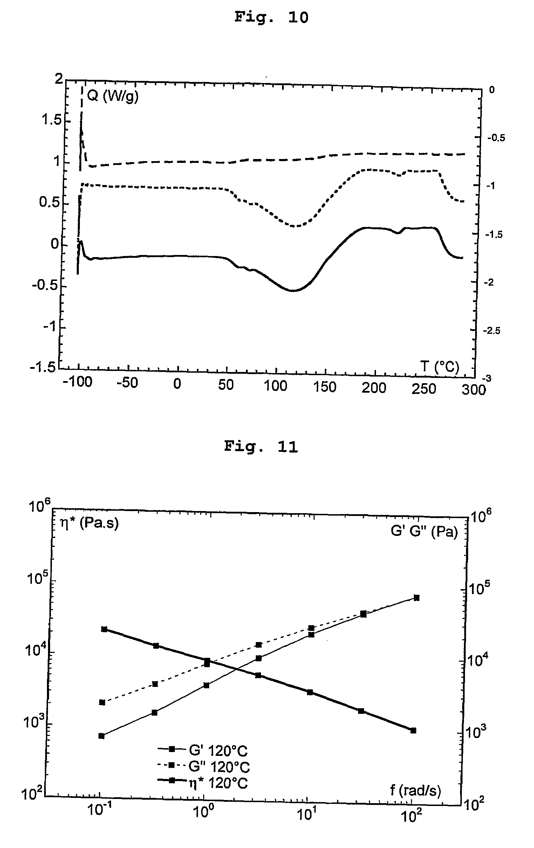

La figure 10 représente le thermogramme DSC du mélange, et l'on constate que la température de transition vitreuse n'y est pas visible. La courbe en trait plein représente le flux de chaleur total, la courbe en pointillés courts représente le signal réversible et la courbe en pointillés longs représente le signal irréversible.

Le mélange PSUSH / tétraéthylsulfamide a été broyé dans un broyeur mécanique à lames (commercialisé sous la marque IKA) équipé d'une grille de 2 mm. Les grains récupérés après broyage ont été placés dans une étuve ventilée à 80°C pendant 4 heures pour éliminer l'eau qui gênerait l'extrusion.

La viscosité du mélange PSUSH/tétraéthylsulfamide a été caractérisée en rhéométrie dynamique avec un rhéomètre ARES de la société Rheometrics, à 120°C et pour des gradients de cisaillements entre 10⁻¹ et 10² s⁻¹. La figure 11 montre le comportement du mélange. La courbe définie par des carrés reliés par une ligne en trait plein fin représente G', c'est-à-dire le module élastique. La courbe définie par des carrés reliés par une ligne en trait pointillé représente G", c'est-à-dire le module visqueux. La courbe définie par des carrés reliés par une ligne en trait plein gras représente la viscosité η*. Cette figure montre que la viscosité est de 1000 Pa.s à 100 s⁻¹ et à 120°C, et que le mélange peut donc être extrudé.

On a préparé un film par extrusion d'un mélange PSUSH/tétraéthylsulfamide à l'aide du rhéomètre capillaire Gottfert 1500, analogue à celui utilisé dans l'exemple 3. La température d'extrusion choisie dans le cas présent est de 120°C. L'épaisseur du film en sortie de filière est de 0,8 mm, et l'étirage du film permet de diminuer son épaisseur jusqu'à 0,1 mm.

Le film est ensuite refroidi à température ambiante. Il est transparent et sa surface ne présente pas de défauts.

Le film est ensuite immergé dans l'eau pendant 24 heures à température ambiante pour éliminer le plastifiant qui se solubilise dans l'eau. Une analyse RMN du matériau après séchage permet de vérifier que le plastifiant est totalement éliminé. La membrane est ensuite conservée, dans l'eau ou en atmosphère saturée en humidité.

La conductivité protonique du film de polysulfone sulfoné acide, mesurée à 20°C et 90% d'humidité, de la même manière que dans l'exemple 3, est égale à 1,1 mS.cm⁻¹.

### Exemple 5

### Polysulfone sulfoné - tétraéthylsulfamide - H3

Cet exemple a été réalisé en utilisant le polymère PSUSH utilisé dans l'exemple 3, du tétraéthylsulfamide comme plastifiant, et de l'acide phosphatoantimonique (H3) comme charge. Le mélange contenait 26% en masse, soit 30% en volume, de plastifiant. Dans le mélange H3/PSUSH (qui représente 74% en masse ou 70% en volume par rapport au mélange des 3 constituants), H3 représente 10% en volume par rapport à PSUSH.

Le mélange PSUSH / tétraéthylsulfamide / H3 été réalisé dans un mélangeur Rhéomix analogue à celui utilisé dans l'exemple 3. La température du mélangeur était régulée à 100°C. La vitesse de rotation des rotors était fixée à 80 tr/min, ce qui correspond à un cisaillement moyen de 80 s⁻¹.

PSUSH, le tétraéthylsulfamide et H3 ont été pesés séparément à 1 mg près, puis ils ont été préalablement mélangés par agitation mécanique avant d'être versés dans la trémie du mélangeur. Les rotors ont été actionnés pendant 20 minutes. Le produit obtenu est un liquide transparent, de couleur jaune, peu visqueux à la température de réalisation du mélange, soit 100°C. A température ambiante, le produit devient un solide, il est homogène à l'oeil nu.

Le mélange PSUSH / tétraéthylsulfamide / H3 a été broyé dans un broyeur mécanique à lames (commercialisé sous la marque IKA) équipé d'une grille de 2 mm. Les grains récupérés après broyage ont été placés dans une étuve ventilée à 80°C pendant 4 heures pour éliminer l'eau qui gênerait l'extrusion.

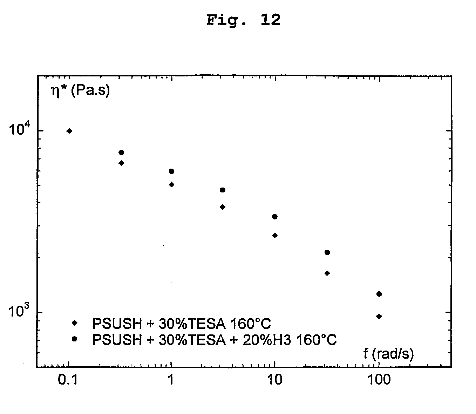

La viscosité du mélange PSUSH/tétraéthylsulfamide / H3 a été caractérisée en rhéométrie dynamique avec un rhéomètre ARES de la société Rheometrics, à 160°C et pour des gradients de cisaillements entre 10⁻¹ et 10² s⁻¹. La figure 12 montre le comportement du mélange. La courbe définie par des carrés représente la viscosité η* pour le mélange ternaire du présent exemple. La courbe définie par des carrés, correspondant au mélange binaire de l'exemple 4. La figure 12 montre que la viscosité est de 1000 Pa.s à 100 s⁻¹ et à 160°C, qu'elle est peu différente de la viscosité du mélange binaire sans H3, et que le mélange ternaire du présent exemple peut donc être extrudé.

On a préparé un film par extrusion d'un mélange PSUSH/tétraéthylsulfamide/H3 à l'aide du rhéomètre capillaire Gottfert 1500, analogue à celui utilisé dans l'exemple 3. La température d'extrusion choisie dans le cas présent est de 120°C. L'épaisseur du film en sortie de filière est de 0,8 mm, et l'étirage du film permet de diminuer son épaisseur jusqu'à 0,1 mm.

Le film est ensuite refroidi à température ambiante. Il est transparent et sa surface ne présente pas de défauts.

Le film est ensuite immergé dans l'eau pendant 24 heures à température ambiante pour éliminer le plastifiant qui se solubilise dans l'eau. Une analyse RMN du matériau après séchage permet de vérifier que le plastifiant est totalement éliminé. La membrane est ensuite conservée, dans l'eau ou en atmosphère saturée en humidité.

### Exemples 6 à 8

Ces exemples concernent l'extrusion de mélanges polymère/plastifiant analogues à ceux des exemples 3 à 5, l'extrusion étant effectuée à l'aide d'une extrudeuse commercialisée par la société DACA sous la marque Microcompounder.

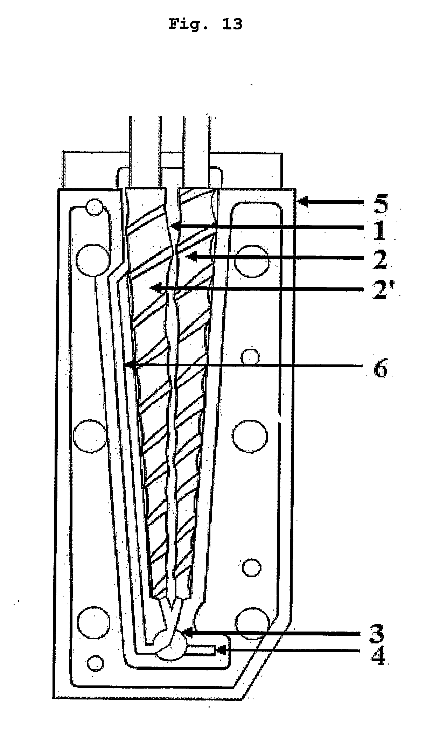

Le corps de l'extrudeuse est formée par 2 plaques similaires s'assemblant entre elles. La figure 13 représente une vue de face de l'une des plaques (5) telle que visible lorsque l'extrudeuse est ouverte pour son nettoyage. Elle comprend un fourreau (1) dans lequel sont placées deux vis coniques contrarotatives (2, 2'), des cartouches chauffantes (non représentées) insérées dans les deux plaques de manière à maintenir une température homogène dans le fourreau, un capteur de température (non représenté), un capteur de couple (non représenté), une vanne à deux positions (3), une filière interchangeable 4, et un canal (6) reliant la partie inférieure à la partie supérieure du fourreau.

Le volume du fourreau (1) est de 4,5 cm³.

Les 2 vis coniques contrarotatives (2, 2') ont une longueur de 100 mm et un diamètre maximal de 10 mm. Leur vitesse de rotation peut varier de 0 à 360 tours par minute. Dans le présent exemple, la vitesse était de 100 tours par minute, ce qui représente un cisaillement moyen d'environ 1500 s⁻¹, c'est-à-dire un cisaillement représentatif des conditions industrielles d'extrusion.

La vanne à 2 positions (3) peut être soit en position 'Recyclage', qui permet au matériau en bout de vis de remonter pour entrer à nouveau dans le fourreau, soit en position 'Extrusion', pour faire sortir le matériau à travers la filière. Sur la figure, elle est en position "recyclage".

La filière interchangeable (4) utilisée dans le présent exemple est une filière axisymétrique de diamètre 2 mm. Dans l'extrudeuse Microcompounder, l'extrusion est effectuée dans les conditions suivantes. Les plaques de l'extrudeuse sont régulées à une température Te donnée. Le mélange à extruder est placé dans une trémie d'alimentation, et poussé par un piston dans le fourreau. À l'intérieur du fourreau, les deux vis co-rotatives mélangent et fondent le matériau, et le forcent vers le bas. Quand le matériau atteint le bas du fourreau, il remonte par le canal extérieur (6) puis entre à nouveau dans le fourreau pour être mélangé. Ce processus peut être répété plusieurs fois, pendant une durée Dex. La température du mélange polymère / plastifiant est mesurée en temps réel par le capteur de température. Un capteur de couple (non représenté) mesure la résistance Re engendrée par le matériau pendant la rotation des vis, dans la gamme de 0 à 5 N.m. À la fin du procédé de mélange, la vanne est tournée en position extrusion, afin de faire sortir le matériau à travers la filière (4).

### Exemple 6 : Polysulfone sulfonée - imidazole

Cet exemple a été réalisé en utilisant un mélange PSUSH / imidazole préparé de la même manière que dans l'exemple 3, mais avec un rapport en masse imidazole/PSUSH de 27/73.

L'extrusion a été effectuée avec 3,20 g de mélange, avec une température de plaques Te de 160°C, et une durée Dex de 5 min.

La température du mélange PSUSH/imidazole, mesurée en temps réel par le capteur de température, est restée constante à 160°C, ce qui signifie que le mélange ne s'est pas échauffé. Le couple mesuré était de 3,8 N.m, ce qui veut dire que le matériau a une viscosité élevée à 160°C. À la fin du procédé de mélange, la vanne a été tournée en position extrusion, afin de faire sortir le matériau à travers la filière. L'extrudat obtenu est lisse et souple à température ambiante.

### Exemple 7 : Polysulfone sulfonée - tétraéthylsulfamide

Cet exemple a été réalisé en utilisant un mélange PSUSH / tétraéthylsulfamide préparé de la même manière que dans l'exemple 4, mais avec un rapport en masse tétraéthylsulfamide /PSUSH de 26/74.

L'extrusion a été effectuée avec 5,4 g de mélange, avec une température de plaques Te de 130°C, et une durée Dex de 5 min.

La température du mélange PSUSH/ tétraéthylsulfamide, mesurée en temps réel par le capteur de température, est restée à 130°C, ce qui signifie que le mélange ne s'est pas échauffé. Le couple mesuré était de 2,7 N.m, ce qui veut dire que le matériau coule facilement. À la fin du procédé de mélange, la vanne a été tournée en position extrusion, afin de faire sortir le matériau à travers la filière. L'extrudat obtenu est lisse et souple à température ambiante.

### Exemple 8 : Polysulfone sulfonée - tétraéthylsulfamide - H3

Cet exemple a été réalisé en utilisant un mélange PSUSH / tétraéthylsulfamide / H3 préparé de la même manière que dans l'exemple 5. Le mélange contenait 26% en masse, soit 30% en volume, de plastifiant. Dans le mélange H3/PSUSH (qui représente 74% en masse ou 70% en volume par rapport au mélange des 3 constituants), H3 représente 10% en volume par rapport à PSUSH.

L'extrusion a été effectuée avec 2,90 g de mélange, dans les conditions suivantes avec une température de plaques Te de 160°C, et une durée Dex de 5 min.

La température du mélange PSUSH/ tétraéthylsulfamide /H3, mesurée en temps réel par le capteur de température, est restée à 160°C, ce qui signifie que le mélange ne s'est pas échauffé. Le couple mesuré était de 4 N.m, ce qui veut dire que le matériau a une viscosité élevée à 160°C. À la fin du procédé de mélange, la vanne a été tournée en position extrusion, afin de faire sortir le matériau à travers la filière. L'extrudat obtenu est lisse et souple à température ambiante.

## Revendications

1. Procédé pour la préparation d'une membrane par extrusion d'un polymère thermoplastique portant des groupements ioniques acides répondant à la formule -A^{p-}(H⁺)ₚ, dans laquelle A représente la partie anionique du groupement ionique et p représente la valence du groupement anionique, consistant à préparer un mélange constitué par un polymère à groupements ioniques acides et par au moins un plastifiant, à extruder le mélange obtenu pour former un film, puis à laver en milieu aqueux le film obtenu pour éliminer ledit (lesdits) plastifiant(s), **caractérisé en ce que** le(s) plastifiant(s) est(sont) choisi(s) parmi les composés dont la température d'ébullition est supérieure à la température maximale d'extrusion du polymère auquel il est associé, qui sont stables vis-à-vis des groupements ioniques du polymère et qui sont solubles dans l'eau ou dans les solvants miscibles à l'eau, lesdits plastifiants étant choisis parmi :
- les composés agissant avec le groupe ionique du polymère par formation d'une liaison faible de type liaison hydrogène, choisis dans le groupe constitué par le sulfamide H₂N-SO₂-NH₂, les tétraalkylsulfamides, les alkylsulfonamides, et les arylsulfonamides R³-SO₂NH₂ dans lesquels R³ est un groupe phényle, un groupe tolyle ou un groupe naphtyle ;
- les composés agissant avec le groupe ionique du polymère par formation d'une liaison forte, de type liaison ionique, choisis parmi l'imidazole, les N-alkylimidazole, le N-vinylimidazole ; les oligomères d'oxyde d'éthylène portant un groupe terminal amine primaire ou un groupe terminal amine secondaire ; les amines secondaires ; les amines tertiaires portant trois substituants oligomères d'oxyde d'éthylène.

2. Procédé selon la revendication 1, **caractérisé en ce que** le milieu aqueux utilisé pour le lavage du film obtenu après extrusion est constitué par de l'eau, par un solvant miscible à l'eau dans lequel le plastifiant est soluble, ou par un mélange d'un tel solvant avec de l'eau.

3. Procédé selon la revendication 1, **caractérisé en ce que** le polymère thermoplastique est un polymère dont la chaîne est constituée par des unités récurrentes identiques ou différentes, chaque unité récurrente comprenant au moins un groupe fonctionnel et au moins un groupe aromatique mono-ou polynucléaire, le groupe fonctionnel étant choisi parmi les groupes ester, cétone, éther, sulfure, sulfone, benzoxazole, aminoacide et imide, au moins une partie des groupes aromatiques portant un groupe ionique acide.

4. Procédé selon la revendication 3, **caractérisé en ce que** le groupe fonctionnel fait partie de la chaîne principale du polymère.

5. Procédé selon la revendication 3, **caractérisé en ce que** le groupe fonctionnel fait partie d'un substituant latéral d'un groupe aromatique, ledit groupe aromatique faisant partie de la chaîne principale du polymère.

6. Procédé selon la revendication 1, **caractérisé en ce que** le groupement ionique -A^{p-}-(H⁺)ₚ du polymère est choisi parmi les groupements sulfonate -SO₃⁻H⁺, carboxylate -CO₂H⁺, thiocarboxylate -C (=S) O⁻H⁺, dithiocarboxylate -CS₂⁻H⁺, phosphonate -PO₃²⁻(H⁺)₂, sulfonylamidure -SO₂NH⁻H⁺, et sulfonylimidure (X-SO₂NSO₂-)⁻H⁺, X étant un groupe alkyle, un groupe alkyle perfluoré ou partiellement fluoré, ou un groupe aryle.

7. Procédé selon la revendication 1, **caractérisé en ce que** le polymère est choisi parmi les polymères qui comprennent des segments choisis parmi les segments suivants dans lesquels les indices n, m, x et y représentent chacun un nombre d'unités récurrentes :
- un polyphénylène oxyde répondant à la formule I, 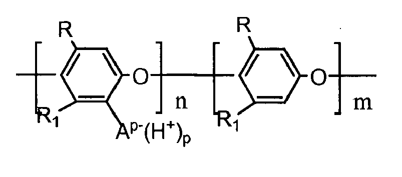 dans laquelle R et R₁ représentent indépendamment l'un de l'autre H, un groupe alkyle, un groupe alkényle, ou un groupe aryle, n et m représentent chacun un nombre d'unités récurrentes ;
- une polyéther-éther-cétone répondant à la formule II ci-après 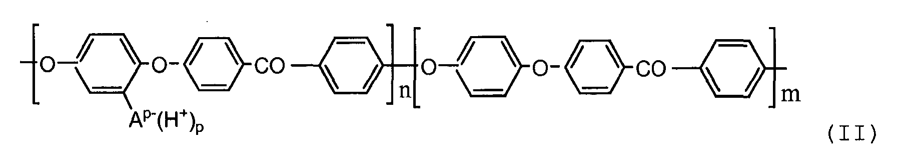
- une polyéther-cétone répondant à la formule III ci-après 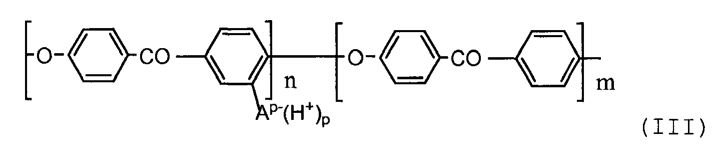
- un polybenzoxazole dont l'unité récurrente répond à la formule IV suivante : 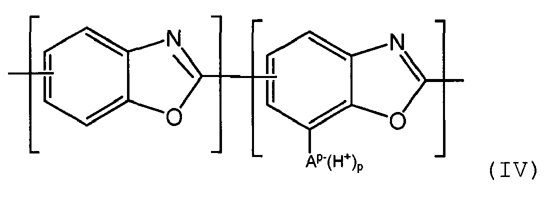
- un acide polyamique dont certaines unités portent un groupement ionique acide, et qui se transforme en polyimide répondant à la formule suivante : 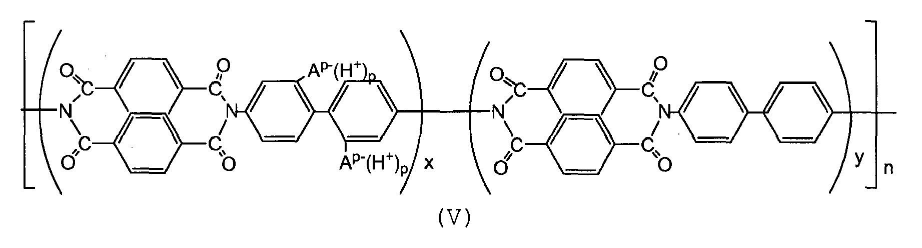
- un polyparaphénylène répondant à la formule VI 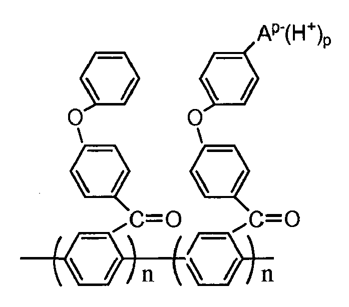
- un polyphénylène sulfure qui répond à la formule VII suivante : 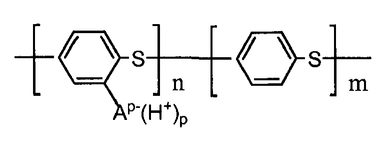
- une polyéther sulfone répondant à la formule VIII 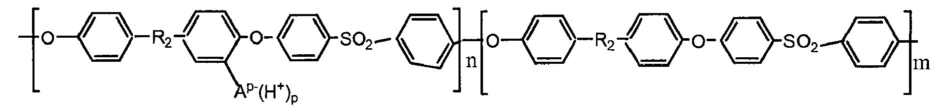 dans laquelle R₂ représente un simple liaison ou un groupe -C(CH₃)-.

8. Procédé selon la revendication 1, **caractérisé en ce que** le mélange de polymère ionique thermoplastique et de plastifiant soumis à l'extrusion contient en outre une charge.

9. Procédé selon la revendication 8, **caractérisé en ce que** la charge est une charge destinée à améliorer la tenue mécanique.

10. Procédé selon la revendication 9, **caractérisé en ce que** la charge est choisie parmi les fibres de verre, les fibres de carbone, les nanotubes de carbone, les microfibrilles de cellulose, les fibres d'alumine, des fibres de polyaramide.

11. Procédé selon la revendication 8, **caractérisé en ce que** la charge est une charge destinée à améliorer l'hydrophilie d'un film obtenu après extrusion du polymère.

12. Procédé selon la revendication 11, **caractérisé en ce que** la charge est l'acide phosphatoantimonique.

## Patentansprüche

1. Verfahren zur Herstellung einer Membran durch Extrusion eines thermoplastischen Polymers mit sauren ionischen Gruppierungen der Formel -A^{p}(H⁺)ₚ, worin A für den anionischen Teil der ionischen Gruppierung steht und p für die Wertigkeit der anionischen Gruppierung steht, bei dem man eine Mischung aus einem Polymer mit sauren ionischen Gruppierungen und mindestens einem Weichmacher herstellt, die erhaltene Mischung zur Bildung einer Folie extrudiert, die erhaltene Folie dann zur Entfernung des Weichmachers bzw. der Weichmacher in wässrigem Medium wäscht, **dadurch gekennzeichnet, dass** der Weichmacher bzw. die Weichmacher aus Verbindungen, deren Siedetemperatur über der maximalen Extrusionstemperatur des Polymers, mit dem sie kombiniert werden, liegt und die gegenüber ionischen Gruppierungen des Polymers stabil sind und in Wasser oder den mit Wasser mischbaren Lösungsmitteln löslich sind, ausgewählt ist bzw. sind, wobei die Weichmacher ausgewählt sind aus:
- Verbindungen, die mit der ionischen Gruppe des Polymers durch Bildung einer schwachen Bindung vom Typ einer Wasserstoffbrückenbindung reagieren, ausgewählt aus der Gruppe bestehend aus Sulfamid H₂N-SO₂-NH₂, Tetraalkylsulfamiden, Alkylsulfonamiden und Arylsulfonamiden R³-SO₂-NH₂, worin R³ für eine Phenylgruppe, eine Tolylgruppe oder eine Naphthylgruppe steht; und
- Verbindungen, die mit der ionischen Gruppe des Polymers durch Bildung einer starken Gruppe vom Typ einer ionischen Bindung reagieren, ausgewählt aus Imidazol, N-Alkylimidazol, N-Vinylimidazol; Ethylenoxid-Oligomeren mit einer primären Aminendgruppe oder einer sekundären Aminendgruppe; sekundären Aminen und tertiären Aminen mit drei Ethylenoxid-Oligomer-Substituenten.

2. Verfahren nach Anspruch 1, **dadurch gekennzeichnet, dass** das zum Waschen der nach der Extrusion erhaltenen Folie verwendete wässrige Medium aus Wasser, einem mit Wasser mischbaren Lösungsmittel, in dem der Weichmacher löslich ist, oder einer Mischung eines derartigen Lösungsmittels mit Wasser besteht.

3. Verfahren nach Anspruch 1, **dadurch gekennzeichnet, dass** es sich bei dem thermoplastischen Polymer um ein Polymer handelt, dessen Kette aus gleichen oder verschiedenen Wiederholungseinheiten besteht, wobei jede Wiederholungseinheit mindestens eine funktionelle Gruppe und mindestens eine ein- oder mehrkernige aromatische Gruppe umfasst, wobei die fuktionelle Gruppe aus Ester-, Keton-, Ether-, Sulfid-, Sulfon-, Benzoxazol-, Aminosäure- und Imidgruppen ausgewählt ist, wobei mindestens ein Teil der aromatischen Gruppen eine saure ionische Gruppe trägt.

4. Verfahren nach Anspruch 3, **dadurch gekennzeichnet, dass** die funktionelle Gruppe Teil der Hauptkette des Polymers ist.

5. Verfahren nach Anspruch 3, **dadurch gekennzeichnet, dass** die funktionelle Gruppe Teil eines Seitensubstituenten einer aromatischen Gruppe ist, wobei die aromatische Gruppe Teil der Hauptkette des Polymers ist.

6. Verfahren nach Anspruch 1, **dadurch gekennzeichnet, dass** die ionische Gruppierung -A^{p-}(H⁺)ₚ des Polymers aus den Gruppierungen Sulfonat -SO₃⁻H⁺, Carboxylat -CO₂H⁺, Thiocarboxylat -C(=S)O⁻H⁺, Dithiocarboxylat -CS₂⁻H⁺, Phosphonat -PO₃²⁻(H⁺)₂, Sulfonylamid -SO₂NH⁻H⁺ und Sulfonylimid (X-SO₂NHSO₂-)⁻H⁺ ausgewählt wird, wobei X für eine Alkylgruppe, eine perfluorierte oder teilfluorierte Alkylgruppe oder eine Arylgruppe steht.

7. Verfahren nach Anspruch 1, **dadurch gekennzeichnet, dass** das Polymer aus Polymeren ausgewählt wird, die Segmente umfassen, die aus den folgenden Segmenten ausgewählt sind, worin die Indices n, m, x und y jeweils für eine Zahl von Wiederholungseinheiten stehen:
- einem Polyphenylenoxid der Formel I, 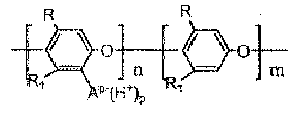 wobei R und R₁ jeweils unabhängig voneinander für H, eine Alkylgruppe, eine Alkenylgruppe oder eine Arylgruppe stehen und n und m jeweils für eine Zahl von Wiederholungseinheiten stehen;
- einem Polyetheretherketon der nachstehenden Formel II 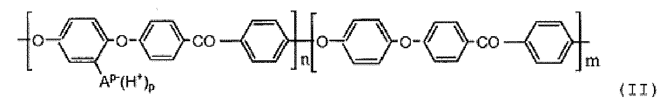
- einem Polyetherketon der nachstehenden Formel III 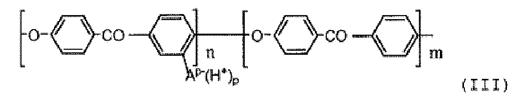
- einem Polybenzoxazol, in dem die Wiederholungseinheit der folgenden Formel IV entspricht: 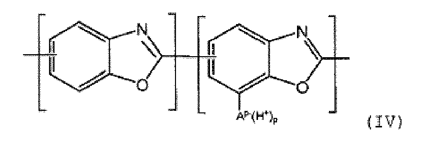
- einer Polyamidsäure, in der bestimmte Einheiten eine saure ionische Gruppierung tragen und die in ein Polyamid der folgenden Formel umgewandelt wird: 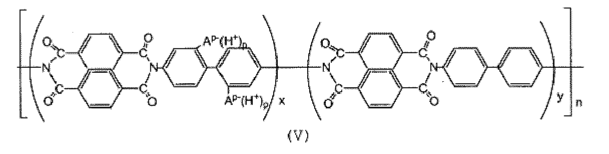
- einem Polyparaphenylen der Formel VI 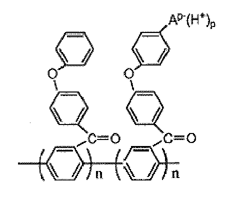
- einem Polyphenylensulfid, das der folgenden Formel VII entspricht: 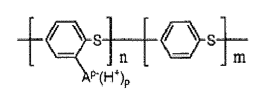
- einem Polyethersulfon der Formel VIII 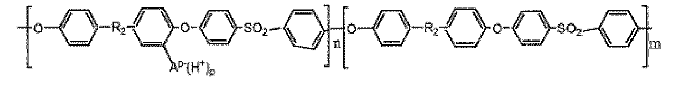 worin R₂ für eine Einfachbindung oder eine -C(CH₃)-Gruppe steht.

8. Verfahren nach Anspruch 1, **dadurch gekennzeichnet, dass** die der Extrusion unterworfene Mischung von thermoplastischem ionischem Polymer und Weichmacher außerdem einen Füllstoff enthält.

9. Verfahren nach Anspruch 8, **dadurch gekennzeichnet, dass** es sich bei dem Füllstoff um einen Füllstoff zur Verbesserung der mechanischen Festigkeit handelt.

10. Verfahren nach Anspruch 9, **dadurch gekennzeichnet, dass** der Füllstoff aus Glasfasern, Kohlefasern, Kohlenstoffnanoröhren, Cellulosemikrofibrillen, Aluminiumoxidfasern und Polyaramidfasern ausgewählt wird.

11. Verfahren nach Anspruch 8, **dadurch gekennzeichnet, dass** es sich bei dem Füllstoff um einen Füllstoff zur Verbesserung der Hydrophilie einer nach Extrusion des Polymers erhaltenen Folie handelt.

12. Verfahren nach Anspruch 11, **dadurch gekennzeichnet, dass** es sich bei dem Füllstoff um Phosphatoantimonsäure handelt.

## Claims

1. Process for preparing a membrane by extrusion of a thermoplastic polymer bearing acid ionic groups corresponding to the formula -A^{p-}(H⁺)ₚ, in which A represents the anionic part of the ionic group and p represents the valency of the anionic group, consisting in preparing a mixture composed of a polymer having acid ionic groups and of at least one plasticizer, in extruding the mixture obtained to form a film, then in washing the film obtained in aqueous medium to remove said plasticizer(s), **characterized in that** the plasticizer(s) is (are) chosen from non-volatile compounds of which the boiling point temperature is above the maximum extrusion temperature of the polymer with which they are combined, which are stable with respect to the ionic groups of the polymer and which are soluble in water or in solvents that are miscible with water, said plasticizers being chosen from:
- the compounds that react with the ionic group of the polymer via formation of a weak bond of the hydrogen bond-type, chosen from the group composed of sulfamide H₂N-SO₂-NH₂. tetraalkylsulfamides, alkylsulfonamides, and arylsulfonamides R³-SO₂-NH₂ in which R³ is a phenyl group, a tolyl group or a naphthyl group; and
- the compounds that react with the ionic group of the polymer by formation of a strong bond, of the ionic bond-type, chosen from imidazole, N-alkylimidazole, N-vinylimidazole; ethylene oxide oligomers bearing a terminal primary amine group or a terminal secondary amine group; secondary amines; and tertiary amines bearing three ethylene oxide oligomer substituents.

2. Process according to Claim 1, **characterized in that** the aqueous medium used for washing the film obtained after extrusion is composed of water, a solvent that is miscible with water in which the plasticizer is soluble, or a mixture of such a solvent with water.

3. Process according to Claim 1, **characterized in that** the thermoplastic polymer is a polymer whose chain is composed of identical or different repeating units, each repeating unit comprising at least one functional group and at least one mononuclear or polynuclear aromatic group, the functional group being chosen from ester, ketone, ether, sulfide, sulfone, benzoxazole, amino acid and imide groups, at least some of the aromatic groups bearing an acid ionic group.

4. Process according to Claim 3, **characterized in that** the functional group makes up part of the main chain of the polymer.

5. Process according to Claim 3, **characterized in that** the functional group makes up part of a side substituent of an aromatic group, said aromatic group making up part of the main chain of the polymer.

6. Process according to Claim 1, **characterized in that** the ionic -A^{p-}(H⁺)ₚ group of the polymer is chosen from sulfonate -SO₃⁻H⁺, carboxylate -CO₂H⁺, thiocarboxylate -C(=S)O⁻H⁺, dithiocarboxylate -CS₂⁻H⁺, phosphonate -PO₃²⁻(H⁺)₂, sulfonylamide -SO₂NH⁻H⁺, and sulfonylimide (X-SO₂NHSO₂-)⁻H⁺ groups, X being an alkyl group, a perfluorinated or partially fluorinated alkyl group or an aryl group.

7. Process according to Claim 1, **characterized in that** the polymer is chosen from the polymers which comprise segments chosen from the following segments in which the indices n, m, x and y each represent a number of repeating units:
- a polyphenylene oxide corresponding to the formula I, 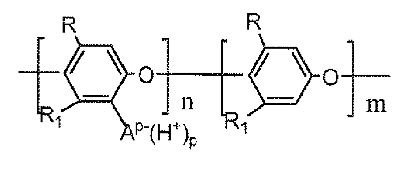 in which R and R₁ represent independently of one another H, an alkyl group, an alkenyl group, or an aryl group, n and m each represent a number of repeating units;
- a polyetheretherketone corresponding to the formula II below 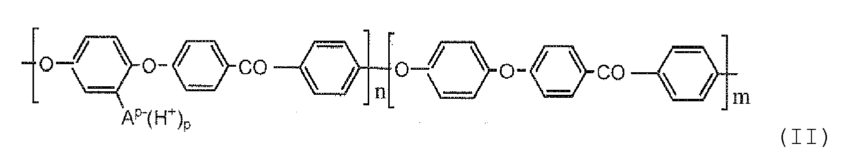
- a polyetherketone corresponding to the formula III below: 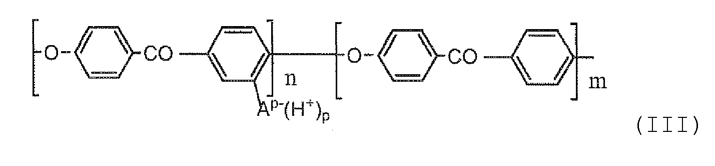
- a polybenzoxazole whose repeating unit corresponds to the formula IV below: 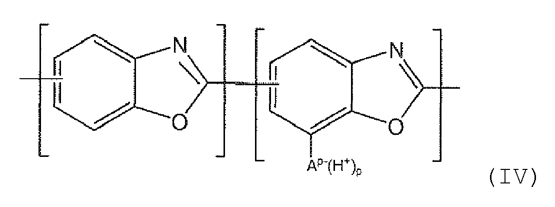
- a polyamic acid of which certain units bear an acid ionic group, and which is converted to a polyimide corresponding to the formula below: 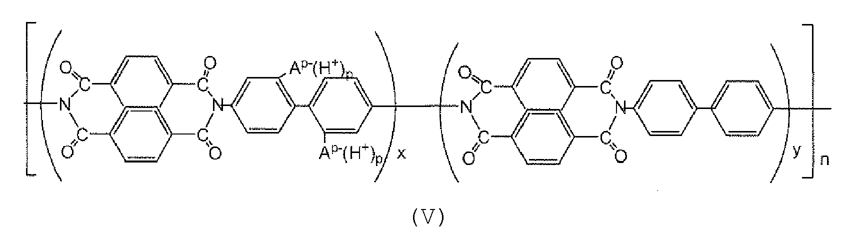
- a polyparaphenylene corresponding to the formula VI: 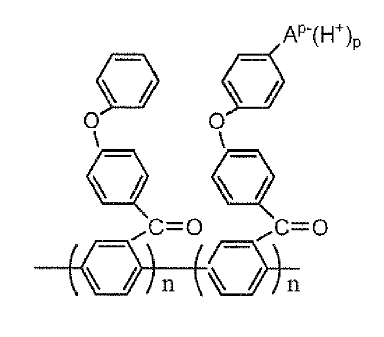
- a polyphenylene sulfide that corresponds to the formula VII below: 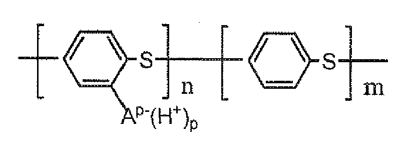
- a polyether sulfide corresponding to the formula VIII: 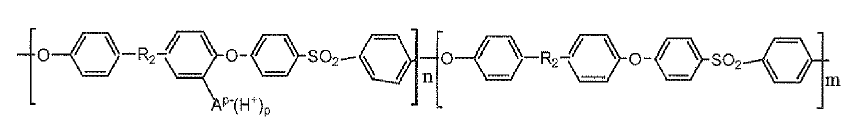 in which R₂ represents a single bond or a -C(CH₃)- group.

8. Process according to Claim 1, **characterized in that** the mixture of ionic thermoplastic polymer and plasticizer subjected to the extrusion contains, in addition, a filler.

9. Process according to Claim 8, **characterized in that** the filler is a filler intended to improve the mechanical strength.

10. Process according to Claim 9, **characterized in that** the filler is chosen from glass fibers, carbon fibers, carbon nanotubes, cellulose microfibrils, alumina fibers and polyaramid fibers.

11. Process according to Claim 8, **characterized in that** the filler is a filler intended to improve the hydrophilicity of a film obtained after extrusion of the polymer.

12. Process according to Claim 11, **characterized in that** the filler is phosphatoantimonic acid.
